# EUROPÄISCHE PATENTSCHRIFT

(11) **EP 1 298 338 B1**
(45) Veröffentlichungstag und Bekanntmachung des Hinweises auf die Patenterteilung: **23.02.2011**
(21) Anmeldenummer: 02021339.3
(22) Anmeldetag: 23.09.2002
(51) Int. Cl.: F16D 13/75

(54) **Druckplattenbaugruppe für eine Reibungskupplung**
Pressure plate assembly for a friction clutch
Ensemble plateau de pression pour un embrayage à friction

(30) Priorität: 28.09.2001 DE 10148176; 30.07.2002 DE 10234548; 28.08.2002 EP 02019060
(43) Veröffentlichungstag der Anmeldung: 02.04.2003
(73) Patentinhaber: ZF Sachs AG, 97424 Schweinfurt (DE)
(72) Erfinder: Vogt, Sebastian, Dipl.-Ing., 97616 Bad Neustadt (DE); Orlamünder, Andreas, Dipl.-Ing., 97422 Schweinfurt (DE)

(56) Entgegenhaltungen:
- DE-A- 19 934 853
- US-A- 5 727 666
- US-A- 6 050 381

## Beschreibung

Die vorliegende Erfindung betrifft eine Druckplattenbaugruppe für eine Reibungskupplung, umfassend eine Gehäuseanordnung, eine mit der Gehäuseanordnung zur gemeinsamen Drehung um eine Drehachse koppelbare Anpressplatte, eine Kraftbeaufschlagungsanordnung, welche bezüglich der Anpressplatte und der Gehäuseanordnung abgestützt ist, sowie eine Verschleißnachstellvorrichtung zur Kompensation von im Betrieb einer Reibungskupplung aufgetretenem Verschleiß, wie z.B. aus US-A 5 727 666 bekannt.

Um dafür zu sorgen, dass verschiedene Systembereiche einer Reibungskupplung oder dieser zugeordnete Systembereiche auch bei Auftreten von Verschleiß, beispielsweise der Reibbeläge einer Kupplungsscheibe, eine im Wesentlichen unveränderte Wirkcharakteristik aufweisen können, ist es bekannt, den in einer Kupplung auftretenden Verschleiß automatisiert zu kompensieren. Insbesondere ist es bekannt, im Abstützweg zwischen einer Kraftbeaufschlagungsanordnung, also beispielsweise einer Membranfeder oder einer Kraftübertragungshebelanordnung, und der Anpressplatte den Verschleiß kompensierende Vorrichtungen anzuordnen.

Es ist die Aufgabe der vorliegenden Erfindung, eine Druckplattenbaugruppe mit automatisiert arbeitendem Verschleißausgleich vorzusehen, bei welcher bei einfacher baulicher Ausgestaltung der der Verschleißkompensation dienenden Systemkomponenten eine zuverlässige und im Wesentlichen fehlerfrei arbeitende Verschleißkompensation bereitgestellt werden kann.

Erfindungsgemäß wird diese Aufgabe gelöst durch eine Druckplattenbaugruppe für eine Reibungskupplung, umfassend eine Gehäuseanordnung, eine mit der Gehäuseanordnung zur Drehung um eine Drehachse verbundene Anpressplatte, eine Kraftbeaufschlagungsanordnung, welche bezüglich der Anpressplatte und der Gehäuseanordnung abgestützt oder abstützbar ist, eine Verschleißnachstellvorrichtung im Abstützweg zwischen der Kraftbeaufschlagungsanordnung und der Gehäuseanordnung, wobei die Verschleißnachstellvorrichtung umfasst: wenigstens ein zur Kompensation von Verschleiß verlagerbares Nachstellelement, über welches die Kraftbeaufschlagungsanordnung bezüglich der Gehäuseanordnung abgestützt oder abstützbar ist, eine an der Gehäuseanordnung getragene Verschleißerfassungsanordnung, welche in einem Verschleißerfassungsbereich mit der Kraftbeaufschlagungsanordnung zusammenwirkt und bei Auftreten von Verschleiß beim betätigen der Kraftbeaufschlagungsanordnung bezüglich der Gehäuseanordnung verlagerbar ist, und welche in einem Nachstellwegbegrenzungsbereich mit dem wenigstens einen Nachstellelement zur Begrenzung eines Nachstellwegs desselben zusammenwirkt, sowie wenigstens ein Blockierelement, das nach verschleißbedingter Verlagerung der Verschleißerfassungsanordnung bezüglich der Gehäuseanordnung die Verschleißerfassungsanordnung gegen Zurückbewegung blockiert.

Bei der erfindungsgemäßen Druckplattenbaugruppe wirkt die der Verschleißkompensation dienende Anordnung zwischen einem Gehäuse und der Kraftbeaufschlagungsanordnung, so dass im Abstützbereich zwischen der Kraftbeaufschlagung und der Anpressplatte keine speziellen Maßnahmen vorgesehen sein müssen, insbesondere die Anpressplatte nicht in spezieller Art und Weise gefertigt sein muss. Da somit bei Durchführung von Ein- bzw. Auskuppelvorgängen lediglich die Anpressplatte, nicht aber zusätzlich auch daran vorgesehene und der Verschleißkompensation dienende Baugruppen bewegt werden müssen, kann ein verbessertes Kuppelverhalten erzielt werden. Gleichermaßen ist durch das erfindungsgemäße Bereitstellen wenigstens eines Blockierelements in Zuordnung zu der zwischen der Kraftbeaufschlagungsanordnung und der Gehäuseanordnung wirkenden Verschleißnachstellvorrichtung dafür gesorgt, dass einmal verschleißbedingt induzierte Bewegungen nicht wieder rückgängig gemacht werden, beispielsweise unter dem Einfluss der Krafteinwirkung der Kraftbeaufschlagungsanordnung oder auch durch in einem derartigen System allgemein immer vorhandene Vibrationen oder Schwingungen.

Beispielsweise kann bei der erfindungsgemäßen Druckplattenbaugruppe vorgesehen sein, dass die Verschleißerfassungsanordnung bei Auftreten von Verschleiß durch einen sich in Richtung von der Gehäuseanordnung weg bewegenden Bereich der Kraftbeaufschlagungsanordnung beaufschlagbar ist.

Um in jeder Verschiebelage der Verschleißerfassungsanordnung dafür sorgen zu können, dass durch das dieser zugeordnete wenigstens eine Blockierelement zuverlässig eine Zurückbewegung verhindert ist, wird vorgeschlagen, dass das wenigstens eine Blockierelement einen keilartigen Blockierschieber umfasst, welcher in einen zwischen der Gehäuseanordnung und der Verschleißerfassungsanordnung gebildeten Zwischenraum vorgespannt ist. Dabei kann vorgesehen sein, dass das Blockierelement zwischen die Gehäuseanordnung und einen mit dem wenigstens einen NachstellelementzusammenwirkendenAbschnittderVerschleißerfassungsanordnung vorgespannt ist.

Eine baulich einfach zu realisierende, gleichwohl jedoch sehr sicher wirkende Anordnung kann vorsehen, dass das wenigstens eine Nachstellelement einen Nachstellring umfasst.

Um ungewünschte Verlagerungen der Verschleißerfassungsanordnung bezüglich der Gehäuseanordnung zu vermeiden, wird vorgeschlagen, dass die Verschleißerfassungsanordnung an der Gehäuseanordnung reibschlüssig getragen ist. Der Reibschluss kann auch durch eine feine Verzahnung verstärkt werden.

Die vorliegende Erfindung betrifft ferner eine Reibungskupplung mit einer erfindungsgemäßen Druckplattenbaugruppe, wobei diese Reibungskupplung als Doppelkupplung ausgebildet sein kann. Derartige Doppelkupplungen weisen also zwei Kupplungsbereiche auf, wobei dann gemäß den Prinzipien der vorliegenden Erfindung in Zuordnung zu wenigstens einem der Kupplungsbereiche eine erfindungsgemäß ausgestaltete Verschleißnachstellvorrichtung mit den jeweils zugeordneten Komponenten vorgesehen sein kann.

Die vorliegende Erfindung wird nachfolgend mit Bezug auf die beiliegenden Zeichnungen beschrieben. Es zeigt:
- Fig. 1: eine Längsschnittansicht einer Reibungskupplung mit einer erfindungsgemäß ausgestalteten Verschleißnachstellvorrichtung;
- Fig. 2: die wesentlichen Systemkomponenten der in Fig. 1 gezeigten Reibungskupplung in einem Ausrückzustand der Kupplung bei nicht vorhandenem Verschleiß;
- Fig. 3: eine der Fig. 2 entsprechende Ansicht der Reibungskupplung in einem Einrückzustand;
- Fig. 4: die Reibungskupplung in einem Einrückzustand bei aufgetretenem Verschleiß;
- Fig. 5: die Reibungskupplung nach aufgetretenem Verschleiß im Ausrückzustand oder im Übergang zu einem Ausrückzustand;
- Fig. 6: die Reibungskupplung nach durchgeführter Verschleißkompensation im Ausrückzustand;
- Fig. 7: die Reibungskupplung nach durchgeführter Verschleißkompensation im Einrückzustand;
- Fig. 8: eine Ausgestaltungsvariante der erfindungsgemäßen Druckplattenbaugruppe;
- Fig. 9: eine weitere abgewandelte Ausgestaltungsvariante der erfindungsgemäßen Druckplattenbaugruppe;
- Fig. 10: eine Doppelkupplung mit erfindungsgemäßen Druckplattenbaugruppen bzw. erfindungsgemäßausgestalteten Verschleißnachstellvorrichtungen.

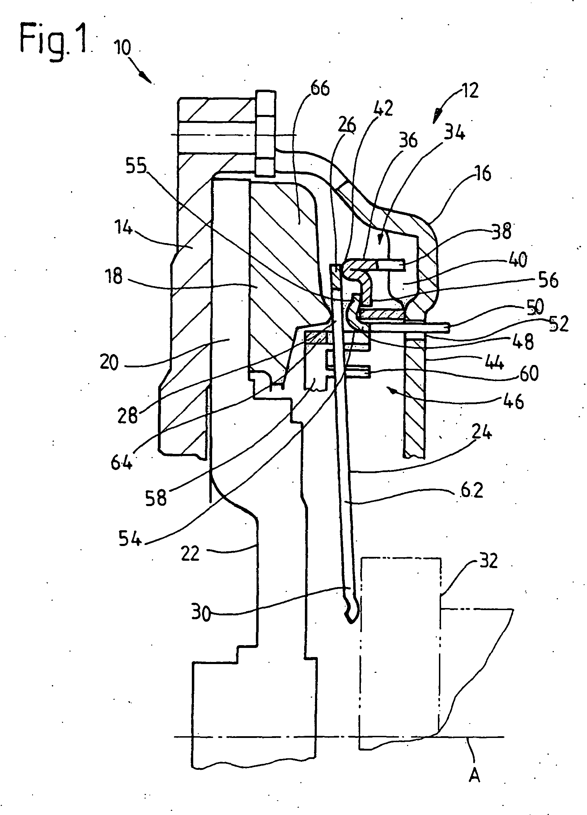

Zunächst wird mit Bezug auf die Fig. 1 allgemein der Aufbau einer erfindungsgemäßen Reibungskupplung 10 bzw. einer in dieser Reibungskupplung 10 enthaltenen erfindungsgemäßen Druckplattenbaugruppe 12 beschrieben. Die Reibungskupplung 10 umfasst ein Schwungrad 14, beispielsweise auch Zweimassenschwungrad o.dgl., das mit einer Antriebswelle, beispielsweise einer Kurbelwelle eines Antriebsaggregats, zur Drehung um eine Drehachse A gekoppelt werden kann. Radial außen ist ein Gehäuse 16 der Druckplattenbaugruppe 12 mit dem Schwungrad 14 drehfest verbunden oder verbindbar. Im Gehäuse 16 ist eine Anpressplatte 18 vorgesehen, die über Tangentialblattfedern oder andere Kopplungsorgane mit dem Gehäuse 16 im Wesentlichen drehfest gekoppelt ist, bezüglich diesem aber in gewissem Ausmaß in Richtung der Drehachse A verlagerbar ist. Die Anpressplatte 18 kann mit dem Gehäuse 16 auch über anpresskraftverstärkende Kopplungseinrichtungen verbunden sein. Die Reibbeläge 20 einer allgemein mit 22 bezeichneten Kupplungsscheibe liegen zwischen der Anpressplatte 18 und dem Schwungrad 14. Eine Kraftbeaufschlagungsanordnung 24 ist in ihrem radial äußeren Bereich 26 durch nachfolgend noch beschriebene Vorkehrungen bezüglich des Gehäuses 16 abgestützt, beaufschlagt in einem radial weiter innen gelegenen Bereich 28 die Anpressplatte 18 beispielsweise in einem Schneidenbereich derselben und wird in einem radial ganz innen gelegenen Bereich 30 durch einen Betätigermechanismus 32 beaufschlagt. Im dargestellten Beispiel umfasst die Kraftbeaufschlagungsanordnung 24 eine Einrückkraftübertragungshebelanordnung, die selbst im Wesentlichen keine Eigenkraft beiträgt und durch den Betätigermechanismus 32 zum Übertragen einer Einrückkraft auf die Anpressplate 18 radial innen, also im radial inneren Bereich 30, in Richtung auf das Schwungrad 14 zu pressbar ist. Es ist selbstverständlich, dass die Kraftbeaufschlagungsanordnung 24 beispielsweise auch einen Kraftspeicher, insbesondere Membranfeder, umfassen kann, der bei der in der Fig. 1 dargestellten Anordnung dann im Rahmen einer sog. gezogenen Kupplung wirksam ist.

Um den im Bereich der Reibbeläge 20 auftretenden Verschleiß bei der Reibungskupplung 10 kompensieren zu können, ist eine allgemein mit 34 bezeichnete Verschleißnachstellvorrichtung vorgesehen. Diese umfasst einen Nachstellring 36. Der Nachstellring 36 weist an seiner dem Gehäuse 16 zugewandten Seite in Umfangsrichtung aufeinander folgend mehrere Rampenflächen 38 auf, die an komplementären Rampenflächen 40 des Gehäuses anliegen. Eine Verdrehung des Nachstellrings 36 um die Drehachse A führt dazu, dass ein durch diesen bereitgestellter Abstützbereich 42, an welchem die Kraftbeaufschlagungsanordnung 24 bezüglich des Gehäuses 16 abgestützt ist, sich in axialer Richtung verlagert, und zwar in Richtung von einem Bodenbereich 44 des Gehäuses 16 weg und in Richtung auf das Schwungrad 14 zu. Um diese Verlagerung zu induzieren, kann eine Vorspannfeder vorgesehen sein, durch welche der Nachstellring 36 zur Drehbewegung bezüglich des Gehäuses 16 in Umfangsrichtung vorgespannt ist. Bei dieser Drehbewegung verlagert sich also gleichzeitig der Nachstellring 36 in axialer Richtung. Es.sei darauf hingewiesen, dass hier beispielsweise auch zwei mit jeweiligen komplementären Rampenflächen aneinander anliegende Nachstellringe vorgesehen sein könnten, wobei der dargestellte Nachstellring 36 wieder den Abstützbereich 42 für die Kraftbeaufschlagungsanordnung 24 bildet, bezüglich der Kraftbeaufschlagungsanordnung 24 aber beispielsweise drehfest gehalten werden kann, während ein anderer sich am Gehäuse 16 abstützender Nachstellring dann durch die bereits angesprochene Vorspannung zur Drehung in Umfangsrichtung vorgespannt sein kann. Würde dieser Ring sich in Umfangsrichtung um die Drehachse A drehen, würde auch dies eine Axialverlagerung des gezeigten Nachstellrings 36 zur Folge haben.

Die Verschleißnachstellvorrichtung 34 umfasst ferner eine allgemein mit 46 bezeichnete Verschleißerfassungsanordnung. Die Verschleißerfassungsanordnung 46 weist im dargestellten Beispiel ein erstes im Allgemeinen ringartiges Bauteil 48 auf, das mit mehreren axial gerichteten Verbindungsvorsprüngen 50 in zugehörige Aussparungen 52 im Bodenbereich 44 des Gehäuses 16 eingreift. Ein ringartiger Abschnitt 54 überlappt sich mit nach radial außen greifenden Vorsprüngen 55 mit einem entsprechenden Abschnitt 56 am Nachstellring 36 und bildet einen Nachstellwegbegrenzungsbereich für den Nachstellring 36, dessen Funktion nachfolgend noch beschrieben wird. Sind die sich im Wesentlichen axial durch die Öffnungen 52 hindurch erstreckenden Vorsprünge 50 nach radial außen vorgespannt, so liegen sie reibschlüssig am Bodenbereich 44 des Gehäuses 16 an und sorgen dafür, dass im Allgemeinen das Bauteil 48 sich nicht selbsttätig bezüglich des Gehäuses 16 verlagern kann.

Ein zweites im Wesentlichen ringartig ausgebildetes Bauteil 58 weist wiederum mehrere Axialvorsprünge 60 auf, welche jeweils zwischen einzelnen Hebelabschnitten 62 der Kraftbeaufschlagungsanordnung 24 hindurchgreifen und mit dem erstgenannten Bauteil 48 beispielsweise durch Verschweißung verbunden sind. Die Hebelabschnitte 62 der Kraftbeaufschlagungsanordnung 24 liegen somit in axialer Richtung zwischen dem ringartigen Abschnitt 54 des Bauteils 48 und einem ringartigen Abschnitt 64 des Bauteils 58, wobei hier keine feste axiale Einspannung vorhanden ist, sondern, wie man in Fig. 1 erkennt, die einzelnen Hebelabschnitte 62 in ihrem im Wesentlichen in radialer Richtung die Verschleißerfassungsanordnung 46 durchsetzenden Bereich ein gewisses Axialbewegungsspiel haben.

Der Verschleißerfassungsanordnung 46 ist ferner wenigstens ein Blockierelement 66 zugeordnet. Dieses Blockierelement 66 ist als keilartiger und in Umfangsrichtung bewegbarer Schieber ausgebildet, der zwischen einem zwischen dem Bodenbereich 44 des Gehäuses 16 und den nach radial außen greifenden und in Umfangsrichtung zueinander in Abstand liegenden Abschnitten 55 des Bauteils 48 gebildeten Zwischenraum eingreift und durch eine Vorspannfeder in diesen Zwischenraum vorgespannt ist. Aus Symmetriegründen ist es vorteilhaft, über den Umfang verteilt mehrere derartige Blockierelemente 66 vorzusehen.

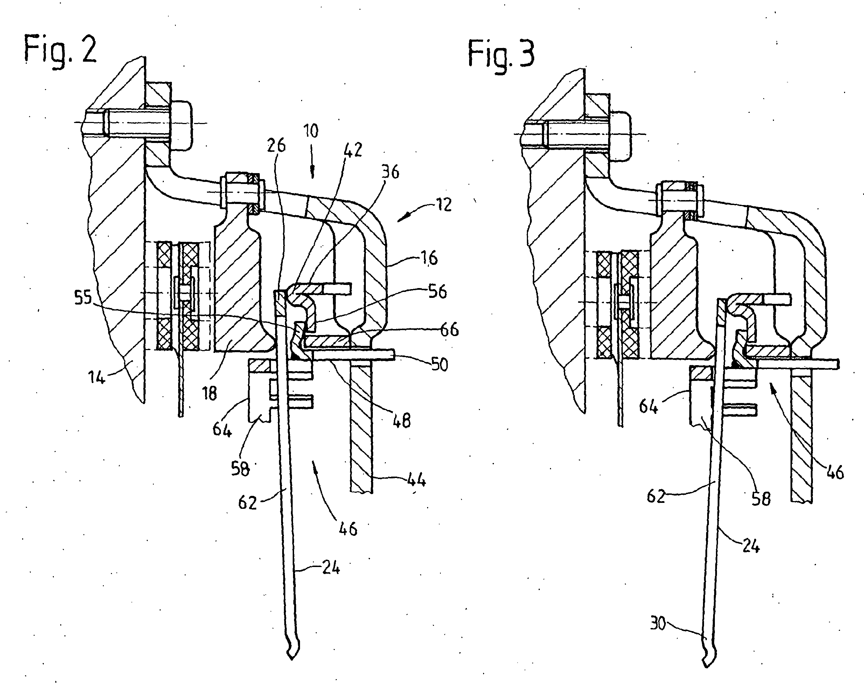

Die Funktion der in Fig. 1 beschriebenen Verschleißnachstellvorrichtung 34 wird nachfolgend mit Bezug auf die Fig. 2 - 7 detailliert beschrieben, wobei lediglich auf die hierfür wesentlichen Komponenten eingegangen wird.

In Fig. 2 ist die Druckplattenbaugruppe 12 bzw. die diese aufweisende Reibungskupplung 10 in einem Zustand gezeigt, in welchem kein Verschleiß vorliegt, beispielsweise die Kupplung neu ist und weiterhin die Reibungskupplung 10 in einem Ausrückzustand ist. Das heißt, dass durch die Kraftbeaufschlagungsanordnung 24 keine die Anpressplatte 18 in Richtung auf das Schwungrad 14 zu vorspannende Krafteinwirkung erzeugt ist und somit in entsprechender Weise die Kraftbeaufschlagungsanordnung 24 in ihrem radial äußeren Bereich 26 im Wesentlichen auch keine Kraft auf den Abstützbereich 42 des Nachstellrings 36 ausübt. Durch die vorangehend angesprochene Vorspannwirkung würde an sich der Nachstellring 36 die Tendenz haben, sich in Umfangsrichtung verdrehen zu wollen, mit der Folge einer entsprechenden Axialverlagerung desselben. Durch die Verschleißerfassungsanordnung 46, welche mit ihren Abschnitten 55 jedoch den Bereich 56 des Nachstellrings 36 radial übergreift, und welche weiterhin durch die axialen Vorsprünge 50 und deren Vorspannwirkung reibschlüssig am Gehäuse 16 gehalten ist, ist jedoch der Nachstellring 36 gegen Axialbewegung und somit auch gegen Drehung festgehalten. Weiterhin wird unter anderem durch das wenigstens eine Blockierelement 66 verhindert, dass sich das Bauteil 48 und somit die gesamte Verschleißerfassungsanordnung 46 in Richtung zum Bodenbereich 44 des Gehäuses 16 verlagert. Man erkennt, dass zwischen den Hebelabschnitten 62 der Kraftbeaufschlagungsanordnung 24 und dem ringartigen Bereich 64 des zweiten Bauteils 58 der Verschleißerfassungsanordnung 46 ein geringer axialer Zwischenraum vorhanden ist, so dass auch beim Übergang zu dem in Fig. 3 dargestellten eingekuppelten Zustand, in welchem die Kraftbeaufschlagungsanordnung 24 mit ihren radial inneren Bereichen 30 in Richtung auf das Schwungrad zu verlagert ist, die Hebelabschnitte 62 nicht am ringartigen Bereich 64 zur Anlage kommen oder nicht in einem derartigen Ausmaß zur Anlage kommen, dass das zweite Bauteil 58 und somit die gesamte Verschleißerfassungsanordnung 46 zur Bewegung in axialer Richtung mitgenommen werden.

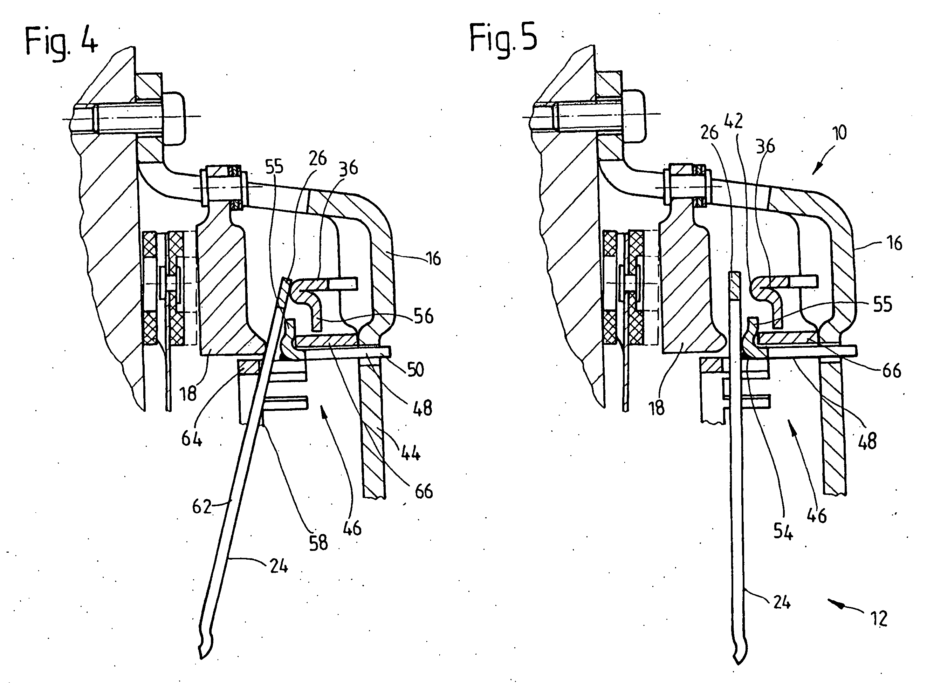

Tritt nunmehr jedoch bei Durchführung eines Einkuppelvorgangs ein Verschleiß auf, so hat dies zur Folge, dass, wie in Fig. 4 in übertriebenem Ausmaß dargestellt, die Kraftbeaufschlagungsanordnung 24 mit ihren Hebelabschnitten 60 deutlich weiter verschwenkt, und zwar derart, dass die radial innerhalb der Beaufschlagung der Anpressplatte 18 liegenden Bereiche dieser Hebelabschnitte 62 sich vergleichsweise weit in Richtung vom Bodenbereich 44 des Gehäuses 16 weg bewegen. Dabei kommt nunmehr die Kraftbeaufschlagungsanordnung 24 mit ihren Hebelabschnitten 62 in Anlage am ringartigen Bereich 64 des Bauteils 58 und nimmt die gesamte Verschleißerfassungsanordnung 46 entgegen der Reibwirkung der Vorsprünge 50 am Gehäuse 16 in axialer Richtung mit. Dabei heben nunmehr die Abschnitte 55 vom Bereich 56 des Nachstellrings 36 ab. Dieser kann jedoch weiterhin keine Drehbewegung durchführen, da er in diesem Zustand unter der massiven Kraftbeaufschlagung des radial äußeren Bereichs 26 der Kraftbeaufschlagungsanordnung 24 steht.

Bei der Axialverschiebung der Verschleißerfassungsanordnung 46 vergrößert sich der axiale Zwischenraum zwischen den nach radial außen greifenden Abschnitten 55 des Bauteils 48 und dem Bodenbereich 44 des Gehäuses 16. In diesen vergrößerten Zwischenraum bewegt sich nunmehr das unter Vorspannung einer zugeordneten Feder stehende keilartig ausgebildete Blockierelement 66, so dass in zuverlässiger Weise dafür gesorgt ist, dass die Verschleißerfassungsanordnung 46 sich ausgehend von der einem aufgetretenen Verschleiß entsprechenden Axialverschiebeposition bezüglich des Gehäuses 16 nicht mehr zurückbewegen kann.

Wird nachfolgend die Reibungskupplung 10 wieder in einen Ausrückzustand gebracht, welcher in Fig. 5 dargestellt ist, so gibt die Kraftbeaufschlagungsanordnung 24 in ihrem radial äußeren Bereich 26 die Beaufschlagung des Nachstellrings 36 auf. Da dieser in diesem Zustand auch nicht mehr durch die Abschnitte 55 der Verschleißerfassungsanordnung 46 an einer Axialbewegung gehindert ist, wird er sich der Vorspannwirkung einer Vorspannfeder o. dgl. folgend in Umfangsrichtung verdrehen und dabei in axialer Richtung bezüglich des Gehäuses 16 verschieben. Tatsächlich wird diese Dreh/Verschiebebewegung einhergehend mit der Verschwenkung der Kraftbeaufschlagungsanordnung 24 auftreten, so dass der in Fig. 5 gezeigte Zustand, bei welchem ein Zwischenraum zwischen dem radial äußeren Bereich 26 der Kraftbeaufschlagungsanordnung 24 und dem Abstützbereich 42 des Nachstellrings 36 vorhanden ist, nur zum Veranschaulichen der Funktionsprinzipien dargestellt ist, tatsächlich jedoch der Nachstellring 36 immer der Bewegung des radial äußeren Bereichs 26 der Kraftbeaufschlagungsanordnung 24 folgen wird.

Beim Übergang in den Ausrückzustand kann es vorkommen, dass die Kraftbeaufschlagungsanordnung 24 in Anlage an dem ringartigen Bereich 54 des Bauteils 48 gelangt. Da jedoch dieses durch das Blockierelement 66 gegen Zurückverschiebung blockiert ist, kann auch dadurch nicht die Gefahr einer ungewollten Zurückverschiebung des Bauteils 46 und somit der gesamten Verschleißerfassungsanordnung 46 entstehen.

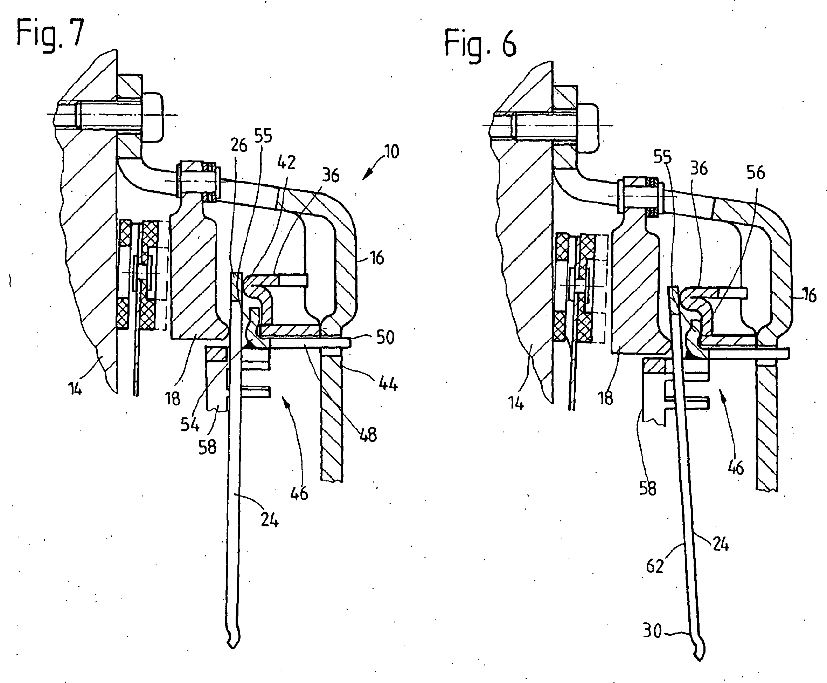

Der Nachstellring 36 wird sich solange verdrehen, bis er mit seinem Bereich 56 wieder an den Abschnitten 55 der Verschleißerfassungsanordnung 46 anstößt. Es liegt dann wieder ein normaler und in Fig. 6 dargestellter Auskuppelzustand vor, bei welchem die Kraftbeaufschlagungsanordnung 24 grundsätzlich wieder an der Anpressplatte 18 und am Nachstellring 36 aufliegt, diese jedoch kraftmäßig noch nicht wesentlich beaufschlagt, bei welchem jedoch die Axiallage der Kraftbeaufschlagungsanordnung 24 im Gehäuse 16 sich entsprechend dem zuvor aufgetretenen Verschleiß verändert hat. Man erkennt, dass die Kraftbeaufschlagungsanordnung 24 nunmehr etwas näher am Schwungrad 14 liegt. Da auch der radial innere Bereich 30 der Kraftbeaufschlagungsanordnung 24 sich entsprechend axial verlagert hat, kann es vorteilhaft sein, im Betätigermechanismus 32 eine entsprechende Kompensation vorzunehmen.

Ausgehend von dem in Fig. 6 dargestellten Zustand, in dem ein zuvor aufgetretener Verschleiß bereits kompensiert ist, kann dann die Reibungskupplung 10 wieder eingerückt werden und den in Fig. 7 dargestellten Einrückzustand einnehmen, in welchem der radial äußere Bereich 26 der Kraftbeaufschlagungsanordnung 24 wieder am Abstützbereich 42 des Nachstellrings 36 abgestützt ist und die Kraftbeaufschlagungsanordnung 24 die Anpressplatte 18 in Richtung auf das Schwungrad 14 zu presst.

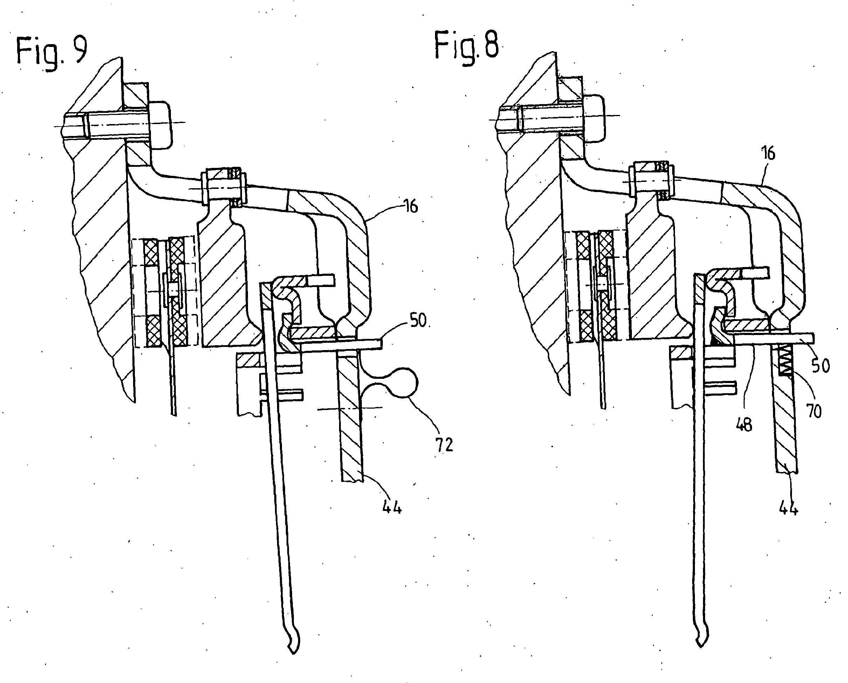

Wie vorangehend bereits erwähnt, liegen die axialen Vorsprünge 50 des Bauteils 48 der Verschleißerfassungsanordnung 46 unter radialer Vorspannung am Bodenbereich 44 des Gehäuses 16 an. Diese Vorspannung kann durch die Formgebung des Bauteils 48 und die dabei vorhandene Eigenelastizität der Vorsprünge 50 erfolgen. Bei der in der Fig. 8 dargestellten Variante wird ggf. zusätzlich zu der Eigenvorspannung in Zuordnung zu jedem oder zumindest zu einem Teil der Vorsprünge 50 jeweils eine als Schraubendruckfeder ausgebildete Vorspannfeder 70 bereitgestellt, die näherungsweise radial orientiert ist und sich an den Vorsprüngen 50 einerseits und am Bodenbereich 44 des Gehäuses 16 andererseits abstützt. Auf diese Art und Weise kann auch unabhängig von der Materialauswahl und der dadurch auch bedingten Stabilität des Bauteils 48 für eine ausreichende Vorspannwirkung und somit einen ausreichend festen Reibschluss gesorgt werden.

Bei der in Fig. 9 dargestellten Ausgestaltungsvariante kann diese Vorspannwirkung in Zuordnung zu zumindest einem Teil der Vorsprünge 50 durch ein beispielsweise blattfederartig ausgebildetes Federelement 72 erfolgen, das in einem Schenkelbereich am Bodenbereich 44 des Gehäuses 16 festgelegt ist und mit seinem anderen Schenkelbereich den zugeordneten Vorsprung 50 beaufschlagt. Es ist selbstverständlich, dass sowohl bei der in den Fig. 1 - 7 gezeigten Ausgestaltungsvariante als auch bei den in den Fig. 8 und 9 gezeigten Ausgestaltungsvarianten die Reibkraftwirkung durch Vorspannen der Vorsprünge 50 nach radial innen erfolgen kann. Auch eine Vorspannung in Umfangsrichtung gegen jeweilige Abschnitte des Gehäuses ist möglich, insbesondere dann, wenn als Vorspannelemente zusätzliche Federn o. dgl. eingesetzt werden.

Vorangehend wurde eine erfindungsgemäß ausgestaltete Verschleißnachstellvorrichtung 34 in Verbindung mit einer herkömmlichen Kraftfahrzeugreibungskupplung, also einer sog. Einfachkupplung gezeigt. In Fig. 9 ist eine als Doppelkupplung ausgebildete Reibungskupplung 10 gezeigt, bei welcher die Prinzipien der vorliegenden Erfindung ebenfalls verwirklicht sind. Diese Reibungskupplung 10 umfasst zwei Kupplungsbereiche 80, 82 mit jeweils einer Anpressplatte 18, 18' und einer zugeordneten Widerlageranordnung bzw. Schwungmasse 14, 14'. Die beiden Schwungmassen 14, 14' sind radial außen miteinander fest verbunden. Ferner ist in Zuordnung zu jedem der Kupplungsbereiche 80, 82 ein Gehäuse 16, 16' vorgesehen. Diese beiden Gehäuse 16, 16' sind in ihrem radial äußeren Bereich beispielsweise miteinander und mit der Schwungmasse 14' fest verbunden. Eine Kraftbeaufschlagungsanordnung 24 des ersten Kupplungsbereichs 80 ist über eine Verschleißnachstellvorrichtung 34, wie sie vorangehend beschrieben wurde, bezüglich des zugeordneten Gehäuses 16 abgestützt und ist an der Anpressplatte 18 über ein Kraftübertragungsorgan 84 abgestützt. Die Kraftbeaufschlagungsanordnung 24' des zweiten Kupplungsbereichs 82 ist über eine zugeordnete Verschleißnachstellvorrichtung 34' bezüglich des Gehäuses 16' abgestützt und beaufschlagt, so wie vorangehend beschrieben, die zugeordnete Anpressplatte 18' direkt.

Auch bei einer derartigen Anordnung, bei welcher also in einer Doppelkupplung die beiden Anpressplatten 18 bzw. 18' in der gleichen axialen Richtung zur Durchführung von Einkuppelvorgängen zu bewegen sind, können also erfindungsgemäße Verschleißnachstellvorrichtungen 34 bzw. 34' zum Einsatz gelangen, um den im Bereich der zugeordneten Kupplungsscheiben auftretenden Verschleiß zu kompensieren.

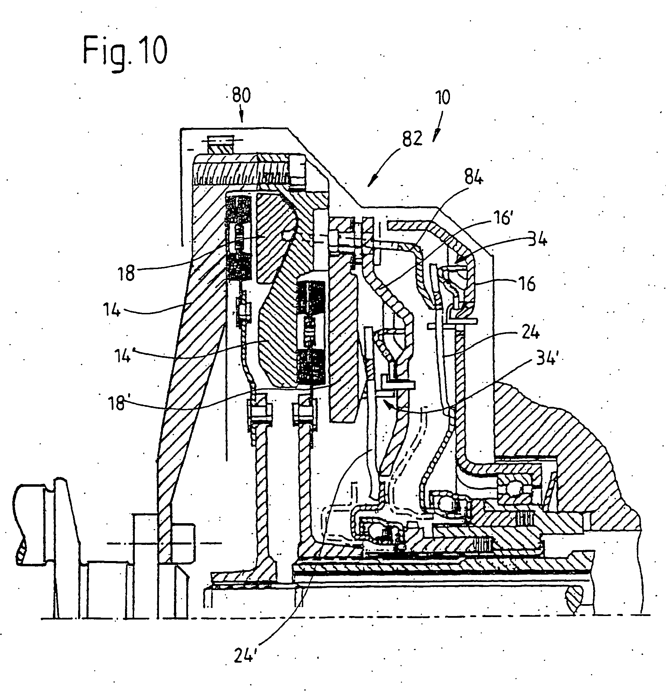

Es sei darauf hingewiesen, dass selbstverständlich auch hier im Bereich der Doppelkupplung bzw. der zugehörigen Kupplungsbereiche 80, 82 verschiedenste bauliche Änderungen möglich sind. So können beispielsweise die beiden Anpressplatten 18, 18' so positioniert sein, dass sie zur Durchführung von Einkuppelvorgängen in entgegengesetzten axialen Richtungen zu bewegen sind, so dass im dargestellten Beispiel der Fig. 10 die Schwungmasse 14' das Widerlager für beide Kupplungsbereiche 80, 82 bildet und die Anpressplatte 18 des ersten Kupplungsbereichs 80 an der anderen axialen Seite der zugehörigen Kupplungsscheibe angeordnet wäre. Die Kraftbeaufschlagungsanordnung 24 dieses ersten Kupplungsbereichs 80 würde sich dann an der Außenseite des Gehäuses 16' des zweiten Kupplungsbereichs 82 ggf. über die zugeordnete Verschleißnachstellvorrichtung 34 abstützen und würde radial außen dann ein ziehend wirksames und die Einrückkraft auf die Anpressplatte 18 übertragendes Kraftübertragungsorgan beaufschlagen. Weiter ist es selbstverständlich, dass bei einer derartigen Doppelkupplung nicht notwendigerweise bei beiden Kupplungsbereichen eine Verschleißnachstellvorrichtung vorgesehen sein muss.

## Patentansprüche

1. Druckplattenbaugruppe für eine Reibungskupplung, umfassend eine Gehäuseanordnung (16), eine mit der Gehäuseanordnung (16) zur Drehung um eine Drehachse (A) verbundene Anpressplatte (18), eine Kraftbeaufschlagungsanordnung (24), welche bezüglich der Anpressplatte (18) und der Gehäuseanordnung (16) abgestützt oder abstützbar ist, eine Verschleißnachstellvorrichtung (34) im Abstützweg zwischen der Kraftbeaufschlagungsanordnung (24) und der Gehäuseanordnung (16), wobei die Verschleißnachstellvorrichtung (34) umfasst:
- wenigstens ein zur Kompensation von Verschleiß vedagerbares Nachstellelement (36), über welches die Kraftbeaufschlagungsanordnung (24) bezüglich der Gehäuseanordnung (16) abgestützt oder abstützbar ist, **dadurch gekennzeichnet daß**
- eine an der Gehäuseanordnung (16) getragene Verschleißerfassungsanordnung (46), welche in einem Verschleißerfassungsbereich (58) mit der Kraftbeaufschlagungsanordnung (24) zusammenwirkt und bei Auftreten von Verschleiß beim Betätigen der Kraftbeaufschlagungsanordnung (24) bezüglich der Gehäuseanordnung (16) verlagerbar ist, und welche in einem Nachstellwegbegrenzungsbereich (54, 55) mit dem wenigstens einen Nachstellelement (32) zur Begrenzung eines Nachstellwegs desselben zusammenwirkt,
- wenigstens ein Blockierelement (66), das nach verschleißbedingter Verlagerung der Verschleißerfassungsanordnung (46) bezüglich der Gehäuseanordnung (16) die Verschleißerfassungsanordnung (46) gegen Zurückbewegung blockiert.

2. Druckplattenbaugruppe nach Anspruch 1,
**dadurch gekennzeichnet, dass** die Verschleißerfassungsanordnung (46) bei Auftreten von Verschleiß durch einen sich in Richtung von der Gehäuseanordnung (16) weg bewegenden Bereich der Kraftbeaufschlagungsanordnung (24) beaufschlagbar ist.

3. Druckplattenbaugruppe nach Anspruch 1 oder 2,
**dadurch gekennzeichnet, dass** das wenigstens eine Blockierelement (66) einen keilartigen Blockierschieber (66) umfasst, welcher in einem zwischen der Gehäuseanordnung (16) und der Verschleißerfassungsanordnung (46) gebildeten Zwischenraum vorgespannt ist.

4. Druckplattenbaugruppe nach Anspruch 3,
**dadurch gekennzeichnet, dass** das Blockierelement (66) zwischen die Gehäuseanordnung (16) und einen mit dem wenigstens einen Nachstellelement (36) zusammenwirkenden Abschnitt (54, 55) der Verschleißerfassungsanordnung (46) vorgespannt ist.

5. Druckplattenbaugruppe nach einem der Ansprüche 1 bis 4,
**dadurch gekennzeichnet, dass** das wenigstens eine Nachstellelement (36) einen Nachstellring (36) umfasst.

6. Druckplattenbaugruppe nach einem der Ansprüche 1 bis 5,
**dadurch gekennzeichnet, dass** die Verschleißerfassungsanordnung (34) an der Gehäuseanordnung (16) reibschlüssig getragen ist.

7. Reibungskupplung, umfassend eine Druckplattenbaugruppe (12) nach einem der vorangehenden Ansprüche.

8. Reibungskupplung nach Anspruch 7,
**dadurch gekennzeichnet, dass** die Reibungskupplung eine Doppelkupplung ist und zwei Kupplungsbereiche (80, 82) aufweist, wobei
bei wenigstens einem der Kupplungsbereiche eine (80, 82) Verschleißnachstellvorrichtung (34) vorgesehen ist.

## Claims

1. Thrust plate assembly for a friction clutch, comprising a housing arrangement (16), a pressure plate (18) connected to the housing arrangement (16) for rotation about an axis of rotation (A), a force application arrangement (24) which is or can be supported with respect to the pressure plate (18) and the housing arrangement (16), a wear adjusting device (34) in the support path between the force application arrangement (24) and the housing arrangement (16), with the wear adjusting device (34) comprising the following:
- at least one adjusting element (36) which can be displaced in order to compensate wear and via which the force application arrangement (24) is or can be supported with respect to the housing arrangement (16), **characterized by**
- a wear detection arrangement (46) which is borne by the housing arrangement (16) and which interacts with the force application arrangement (24) in a wear detection region (58) and which, when wear occurs, can be displaced relative to the housing arrangement (16) during the actuation of the force application arrangement (24), and which, in an adjustment travel limiting region (54, 55), interacts with the at least one adjusting element (36) in order to limit an adjustment travel thereof,
- at least one blocking element (66) which, after a wear-induced displacement of the wear detection arrangement (46) relative to the housing arrangement (16), prevents a return movement of the wear detection arrangement (46).

2. Thrust plate assembly according to Claim 1,
**characterized in that**, when wear occurs, the wear detection arrangement (46) can be acted on by a region, moving in the direction away from the housing arrangement (16), of the force application arrangement (24).

3. Thrust plate assembly according to Claim 1 or 2,
**characterized in that** the at least one blocking element (66) comprises a wedge-like blocking slide (66) which is preloaded in an intermediate space formed between the housing arrangement (16) and the wear detection arrangement (46).

4. Thrust plate assembly according to Claim 3,
**characterized in that** the blocking element (66) is preloaded between the housing arrangement (16) and a section (54, 55), which interacts with the at least one adjusting element (36), of the wear detection arrangement (46).

5. Thrust plate assembly according to one of Claims 1 to 4,
**characterized in that** the at least one adjusting element (36) comprises an adjusting ring (36).

6. Thrust plate assembly according to one of Claims 1 to 5,
**characterized in that** the wear detection arrangement (34) is borne by the housing arrangement (16) in a frictionally engaged manner.

7. Friction clutch comprising a thrust plate assembly (12) according to one of the preceding claims.

8. Friction clutch according to Claim 7,
**characterized in that** the friction clutch is a double clutch and has two clutch regions (80, 82), with a wear adjusting device (34) being provided in at least one of the clutch regions (80, 82).

## Revendications

1. Module de plateau de pression pour un embrayage à friction, comprenant un agencement de boîtier (16), un plateau de pressage (18) connecté à l'agencement de boîtier (16) en vue de tourner autour d'un axe de rotation (A), un agencement de sollicitation de force (24) qui est supporté ou peut être supporté par rapport au plateau de pressage (18) et à l'agencement de boîtier (16), un dispositif de réglage de l'usure (34) dans la voie de support entre l'agencement de sollicitation de force (24) et l'agencement de boîtier (16), le dispositif de réglage de l'usure (34) comprenant :
- au moins un élément de réglage (36) déplaçable en vue de compenser l'usure, par le biais duquel l'agencement de sollicitation de force (24) est supporté ou peut être supporté par rapport à l'agencement de boîtier (16),
**caractérisé par**
- un agencement de détection d'usure (46), porté sur l'agencement de boîtier (16), qui coopère dans une région de détection d'usure (58) avec l'agencement de sollicitation de force (24), et en cas d'usure, lors de l'actionnement de l'agencement de sollicitation de force (24), peut être décalé par rapport à l'agencement de boîtier (16), et qui, dans une région de limitation de la course de réglage (54, 55), coopère avec l'au moins un élément de réglage (36) pour limiter une course de réglage de ce dernier,
- au moins un élément de blocage (66), qui, après le décalage causé par l'usure de l'agencement de détection d'usure (46) par rapport à l'agencement de boîtier (16), bloque l'agencement de détection d'usure (46) pour l'empêcher de revenir en arrière.

2. Module de plateau de pression selon la revendication 1,
**caractérisé en ce que** l'agencement de détection d'usure (46), en cas d'usure, peut être sollicité par une région de l'agencement de sollicitation de force (24) s'écartant de l'agencement de boîtier (16) .

3. Module de plateau de pression selon la revendication 1 ou 2,
**caractérisé en ce que** l'au moins un élément de blocage (66) comprend un coulisseau de blocage en forme de cale (66), qui est précontraint dans un espace intermédiaire formé entre l'agencement de boîtier (16) et l'agencement de détection d'usure (46).

4. Module de plateau de pression selon la revendication 3,
**caractérisé en ce que** l'élément de blocage (66) est précontraint entre l'agencement de boîtier (16) et une portion (54, 55) de l'agencement de détection d'usure (46) coopérant avec l'au moins un élément de réglage (36).

5. Module de plateau de pression selon l'une quelconque des revendications 1 à 4,
**caractérisé en ce que** l'au moins un élément de réglage (36) comprend une bague de réglage (36).

6. Module de plateau de pression selon l'une quelconque des revendications 1 à 5,
**caractérisé en ce que** l'agencement de détection d'usure (46) est porté par engagement par friction sur l'agencement de boîtier (16).

7. Embrayage à friction, comprenant un module de plateau de pression (12) selon l'une quelconque des revendications précédentes.

8. Embrayage à friction selon la revendication 7,
**caractérisé en ce que** l'embrayage à friction est un double embrayage et présente deux régions d'embrayage (80, 82), un dispositif de réglage de l'usure (34) étant prévu au niveau d'au moins l'une des régions d'embrayage (80, 82).
